Europäisches Patentamt

(19) European Patent Office

Office européen des brevets

(11) Numéro de publication: **0 011 580**
**B1**

(12) **FASCICULE DE BREVET EUROPEEN**

(45) Date de publication du fascicule du brevet: **25.05.83**

(51) Int. Cl.³: **B 23 C 3/05 //B23P6/00**

(21) Numéro de dépôt: **79400896.1**

(22) Date de dépôt: **21.11.79**

(54) Outillage pour la réparation, en particulier pour rodage d'un siège de robinet.

(30) Priorité: **21.11.78 FR 7832802**
**22.10.79 FR 7926120**

(43) Date de publication de la demande:
**28.05.80 Bulletin 80/11**

(45) Mention de la délivrance du brevet:
**25.05.83 Bulletin 83/21**

(84) Etats contractants désignés:
**AT BE CH DE GB IT LU NL SE**

(56) Documents cités:
**GB - A - 307 276**
**US - A - 1 455 388**
**US - A - 1 859 837**
**US - A - 2 639 642**
**US - A - 2 993 418**

(73) Titulaire: **Eckendorff, Jean-Pierre**
**29 Rue Aristide Briand**
**F-27007 Evreux (FR)**

(72) Inventeur: **Eckendorff, Jean-Pierre**
**29 Rue Aristide Briand**
**F-27007 Evreux (FR)**

(74) Mandataire: **Foldes, Georges et al,**
**CABINET BONNET THIRION 95 Bd Beaumarchais**
**F-75003 Paris (FR)**

Courier Press, Leamington Spa, England.

Outillage pour la réparation, en particulier pour rodage d'un siège de robinet

Dans sa demande de brevet français N° 2 387 728 du 21 Avril 1977 ainsi qu'au premier certificat d'addition N° 2 419 138 du 6 Mars 1978 rattaché à cette demande le demandeur a décrit un outillage permettant la réfection sur place d'un siège de robinet.

L'outillage décrit comporte un adaptateur, un guide porté par l'adaptateur, un axe porte-outil avec un moyen d'entraînement en rotation, l'adaptateur précité ayant un embout comportant un filetage complémentaire à celui du corps de robinet et un épaulement d'appui de manière telle que l'embout constitue une réplique du corps de robinet.

Dans une forme de réalisation particulière, faisant l'objet du premier certificat d'addition précité, notamment destinée à effectuer la remise en état d'un siège par rodage de ce dernier, le guide est associé par vissage à un fourreau prolongeant l'embout, et il comporte un fond formant un palier de butée à l'axe porte-outil, en sorte que le palier de butée est propre à fixer la position axiale de l'axe porte-outil par rapport au guide, et à déterminer l'avance de l'outil par rotation sur le fourreau qui, lui, reste fixe.

Simultanément à une telle fixation axiale, l'axe porteoutil est guidé radialement afin qu'il ne soit pas susceptible d'oscillations radiales qui se répercuteraient inévitablement sur l'outil et, partant, sur l'usinage effectué. A cet effet, on a proposé d'assurer le guidage radial de l'axe porte-outil au niveau de l'embout, c'est-à-dire sur un tronçon de l'axe porte-outil voisin de l'outil; plus brièvement, dans une telle forme de réalisation, l'axe porte-outil est maintenu en deux points distants, l'un étant une fixation axiale située au voisinage du moyen d'entraînement en rotation, et l'autre un guidage radial situé dans l'embout aménagé à cet effet.

La présente invention concerne un ontillage conforme ou préambule de la revendication 1 (FR—A—2419138) et vise d'une manière générale, le guidage de l'axe porte-outil; elle a pour objet, en variante des dispositions précitées, d'incorporer à l'outillage des moyens de guidage répartis sur pratiquement toute la longueur de l'axe porte-outil en combinaison avec des moyens de fixation axiale, ces moyens étant à même, non seulement d'assurer un guidage axial et radial encore amélioré de l'axe porte-outil avec des tolérances de fabrication serrées, mais encore de rendre le fonctionnement plus souple et d'offrir la possibilité d'obtention d'une qualité de finition irréprochable.

Suivant la présente invention, l'outillage se caractérise par le fait que, pour la fixation axiale de l'axe porte-outil, le palier de butée est constitué par une butée à billes à double effet dont la cage extérieure est solidarisée au guide, tandis que la cage intérieure est solidarisée à l'axe porte-outil aménagé à cet effet.

L'axe porte-outil est ainsi fixé axialement sans jeu au guide tout en étant parfaitement libre en rotation.

Conjointement à la fixation axiale précitée de l'axe porte-outil, l'outillage selon la présente demande se caractérise par le fait que les moyens de guidage radial sont constitués par amoins une bague anti-friction brochée après emmanchement à force dans l'un et/ou l'autre des éléments emboutfourreau, ladite bague est en outre ajustée avec des tolérances de fabrication serrées, de l'ordre du centième de millimètre, permettant la libre rotation sans jeu de l'axe porte-outil.

En pratique, deux bagues telles que ci-dessus sont prévues respectivement dans l'embout et dans le fourreau; elles sont brochées ensemble après emmanchement à force dans ces éléments de façon que leurs axes respectifs soient parfaitement alignés.

Il résulte d'une telle disposition que l'axe porte-outil est, par une partie terminale, voisine du moyen d'entraînement en rotation, fixé axialement par rapport au guide, et ce sans jeu, tandis que, conjointement, le guidage radial est assuré en deux zones respectivement intermédiaire et terminale, plus une zone constituée par la butée à billes.

Selon une autre caractéristique, les cages de la butée à billes comportent des chemins de roulement à gorges profondes enveloppant les billes sur la moitié au moins de leur circonférence de grand cercle conférant à une telle butée à billes la possibilité de résister à d'éventuelles poussées axiales importantes.

En ce qui concerne l'embout, on sait qu'il existe sur le marché de nombreux types de robinets dont les systèmes d'assemblage par vis écrou de la tête de robinet avec le corps, présentent des diamètres et des pas différents, en sorte que pour répondre à la gamme de diamètres et de pas utilisés, l'outillage ci-dessus doit être assorti d'autant d'embouts qu'il y a de types de corps de robinet.

Un autre objet de la présente demande vise à limiter le nombre d'embouts par un aménagement de ceux-ci, les embouts étant adaptés à constituer une réplique approximative satisfaisante pour au moins deux types différents d'écrous de corps de robinet.

A cet effet, l'embout ayant un filetage complémentaire à celui du corps et un épaulement d'appui sur la face terminale de ce corps, se caractérise:

—par un filetage d'embout comportant au moins une spire avec un pas intermédiaire à ceux de deux types différents d'une gamme de types d'écrous de corps de robinet;
—par un diamètre de fond de filet adapté au plus petit des diamètres de crête de filet des deux types d'écrou;

— et un profil de filet aminci ménageant par rapport à l'un ou l'autre des profils d'écrou des deux types, un supplément de jeu au moins égal à la moitié de l'écart entre les deux pas.

Les essais pratiqués montrent que l'on est assuré de trouver, avec un même embout ainsi conçu, au moins une zone de contact vis-écrou lorsque l'épaulement d'appui de l'embout arrive en butée sur la face terminale du corps de robinet, et d'obtenir de cette manière, un maintien satisfaisant de l'outillage sur au moins deux types différents de corps de robinet dont les taraudages présentent des diamètres très voisins, mais des pas sensiblement différents.

Un embout étant adaptable sur au moins deux types différents de corps de robinet, on conçoit que l'avantage principal résultant d'une telle disposition est une réduction appréciable du nombre d'embouts antérieurement requis.

Un autre avantage du supplément de jeu formé par l'aménagement du profil des spires, est la facilité ainsi créée d'une réalisation de l'embout par moulage, notamment dans une matière plastique appropriée.

Suivant une forme de réalisation de l'outillage selon l'invention l'axe porte-outil est, pour son entraînement en rotation couplé à un volant de manoeuvre surplombant le guide et comportant une partie oblongue pour un entraînement lent de l'axe porte-outil, prolongée par un bouton cylindrique pour un entraînement rapide.

Suivant une forme de réalisation particulière, les divers éléments constituant l'outillage selon l'invention à savoir: l'adaptateur, l'embout, le guide, et le volant d'entraînement associé à l'axe porte-outil, sont avantageusement réalisés par moulage.

Suivant une autre forme de réalisation, l'adaptateur formé d'un embout, d'un fourreau, et d'un filetage tels que ci-dessus définis constitue une pièce monobloc moulée, avec entre la partie filetée et la partie fourreau un volant de serrage manuel.

Un tel outillage, constitué d'éléments en matière moulée présente l'avantage de pouvoir être fabriqué à des cadences de production élevées donc d'un coût moindre; d'autre part, le nombre d'éléments entrant dans sa réalisation est limité notamment par le fait que l'adaptateur avec son embout sont constitués par une seule et même pièce.

En combinaison avec les dispositions ci-dessus, l'invention prévoit un outil de taillage spécifique à l'usinage à effectuer, cet outil étant caractérisé par le fait qu'il comporte une face terminale d'attaque avec des dents de coupe radiales avantageusement limitées à trois, et une queue dans laquelle sont ménagées quatre faces adjacentes parallèles à l'axe de la fraise définissant quatre arêtes dont l'une est en alignement avec une dent de coupe, lesdites dents de coupe radiales étant de préférence espacées angulairement de façon irrégulière.

Un tel outil de taillage peut être entièrement réalisé par fraisage en sorte que sa confection est exempte de difficultés, tandis que, l'alignement d'une arête ménagée dans la queue, avec une dent de coupe, présente l'avantage de constituer un point de repère pour la mise en place de la fraise sur une affûteuse; il peut également être envisagé de réaliser au moins un moyen de repérage sur le périmètre de la fraise.

Un outillage comportant conjointement les dispositions énoncées ci-dessus (fixation rigide sur un corps de robinet, guidage en trois zones décalées verticalement de l'axe porte-outil, fixation axiale sans jeu de ce dernier par rapport au guide, outil à dents de coupe convenablement réparties) permet la réalisation d'un usinage d'un siège de robinet par rodage avec un fini irréprochable.

D'autres caractéristiques et avantages de l'invention ressortiront d'ailleurs de la description qui va suivre donnée à titre d'exemple en référence à la planche de dessins annexée dans laquelle:

la figure 1 est une vue en élévation coupe d'un outillage selon l'invention propre à la réfection d'un siège de robinet par rodage de ce siège;

la figure 2 montre en perspective un accessoire utilisable dans certains cas particuliers;

les figures 3 et 4 montrent partiellement à titre d'exemple et à échelle agrandie un filetage d'embout conformément à l'invention engagé dans deux écrous de types différents et,

la figure 5 montre, encore à plus grande échelle que les figures 3, 4, un tronçon de filetage suivant l'invention engagé dans deux écrous de types différents;

la figure 6 est une vue en élévation d'un outil de taillage et,

la figure 7 est une vue de cet outil de taillage suivant la flèche F de la figure 6;

les figures 8 et 9 sont des vues analogues aux figures 6 et 7, d'une variante de réalisation.

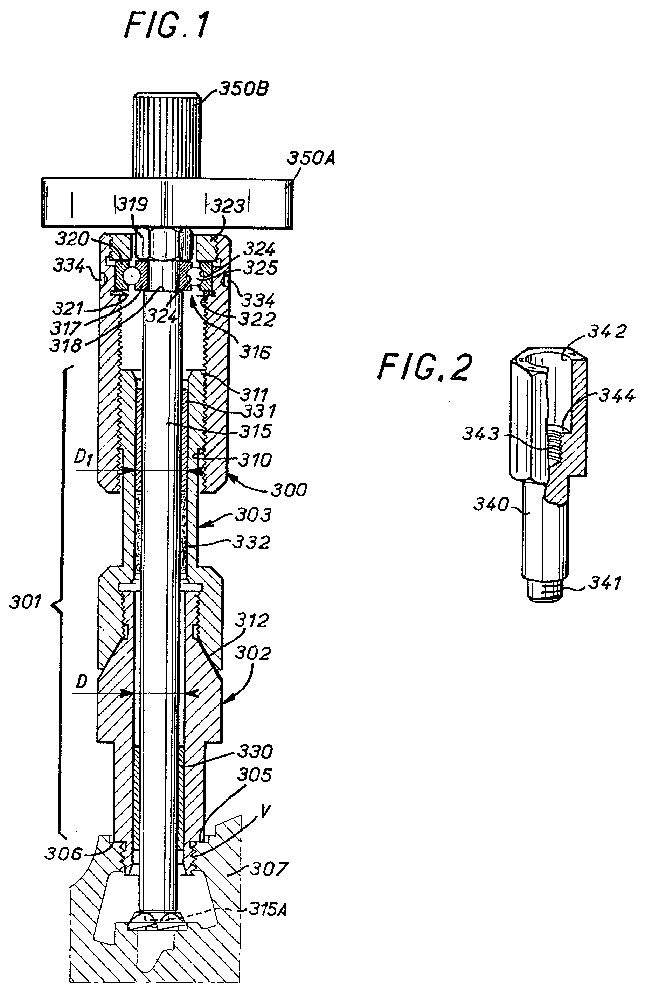

Dans la forme de réalisation choisie et représentés à la figure 1, l'outillage pour la réfection d'un siège de robinet, par rodage de ce siège, comprend un guide 300 associé à un adaptateur indiqué globalement en 301 comprenant un embout 302 surmonté d'un fourreau 303. l'embout 302 ayant de préférence un filetage V dont les caractéristiques apparaîtront dans ce qui suit, et une portée d'appui 305 destinée à coopérer avec une face terminale 306 ménagée dans le coprs de robinet 307, ce dernier étant représenté en traits fins.

Le guide 300 est associé au fourreau 303 par vissage et il comporte à cet effet un taraudage 310 adapté à coopérer avec un filetage de fixation et d'avance 311 prévu en partie haute du fourreau, lequel est par ailleurs, à sa partie basse, associé à l'embout par vissage, l'alignement des élément 302, 303, étant assuré par une portée conique 312.

L'axe porte-outil 315 est fixé axialement par rapport au guide 300 au moyen d'un palier de butée.

Conformément à l'invention, le palier de butée est constitué d'une butée à billes indiquée dans son ensemble en 316. La cage intérieure 317 de cette butée à billes est solidarisée avec l'axe porte-outil au moyen d'un épaulement 318 pratiqué sur ce dernier et d'un écrou de serrage 319, tandis que la cage extérieure 320 est solidarisée au guide 300 par appui sur un anneau 321 inséré dans une rainure circulaire 322 ménagée dans le guide et par une bague filetée extérieurement 323.

Selon une particularité de cette butée à billes, les chemins de roulement ménagés dans chaque cage sont formés par des gorges 324 ayant une profondeur telle que les billes 325 sont enveloppées sur la plus grande partie de leur surface; en d'autres termes, le jeu existant entre les cages intérieure et extérieure est extrêmement réduit.

Selon une autre particularité de la butée à billes en question, les gorges 324 comportent des bords dépourvus d'angles vifs, par exemple chanfreinés, arrondis, ou encore mieux une plage divergente en partant du fond de la gorge, en sorte qu'en cas de poussée axiale importante exercée sur une cage, cette poussée ne marque pas les billes.

Un avantage important résultant d'une telle disposition réside dans le fait que la butée à billes -dite à double effet- est apte à absorber des forces axiales importantes, tant en traction qu'en poussée, par exemple dans le cas d'une mauvaise utilisation de l'outillage, telle que vissage à force de l'embout 302 sur un corps de robinet, alors que la position axiale de l'axe porte-outil fait buter l'outil contre le siège à roder.

En ce qui concerne le guidage radial de l'axe porte-outil 315, l'invention prévoit, selon une forme de réalisation préférée, une zone de guidage intermédiaire dans le fourreau 303, une zone de guidage inférieure dans l'embout 302, et une zone de guidage supérieure grâce à butée à billes 316 précitée.

A cet effet, le fourreau 303 ainsi que l'embout 302 sont alésés sur toute leur longueur à un même diamètre D, D1, en sorte de recevoir chacun, par emmanchement à force à la presse une bague en métal anti-friction 330, 331, par exemple en bronze.

La bague 330 est engagée dans l'embout par l'extrémité côté raccordement au corps de robinet, tandis qu'en ce qui concerne le fourreau 303 la bague 331 est engagée par l'extrémité de raccordement au guide.

Après cette opération l'adaptateur 301 est constitué par assemblage de l'embout 302 avec le fourreau 303, et on effectue un brochage des bagues en sorte d'assurer un alignement parfait de celles-ci.

Une autre bague 332, en feutre ou analogue, imprégnée d'huile, est emboîtée serrée dans l'alésage D1 du fourreau et ce, dans l'espace compris entre ledit fourreau et l'embout; une seconde bague analogue à la précédente pourrait également être emboîtée dans l'alésage D ménagé dans l'embout 302 au dessus de la bague anti-friction 330.

Deux repères 334, d'avance du guide, diamétralement opposés, sont prévus sur la surface extérieure du guide pour contrôler le déplacement axial du porte-outil par rapport à l'adaptateur, ces repères étant, dans l'exemple illustré, obtenus, par poinçonnage, ou perçage; on peut aussi prévoir un ou plusieurs repères ayant la même fonction que ci-dessus qui seraient constitués chacun par un plat s'étendant suivant une génératrice du guide.

L'axe porte-outil 315 est équipé, du côté opposé à l'outil, d'un volant de manoeuvre ayant une partie oblongue 350A adaptée à faciliter la préhension pour effectuer l'opération de rodage proprement dite, cette partie 350A étant elle-même prolongée par une partie 350B cylindrique apte à permettre un entraînement rapide en rotation du porte-outil, pour la finition.

Il convient de noter que dans certains cas, le siège de robinet est situé à l'intérieur du corps à une profondeur telle qu'avec l'outillage décrit le déplacement axial maximal du porte-outil ne permet pas la réfection. En vue de permettre un rodage de tels sièges selon la technique décrite, la présente invention prévoit de compléter l'outillage par un accessoire formant prolongateur, tel que représenté à la figure 2.

Sur cette figure, le prolongateur est tiré d'une barre six pans, puis usiné pour présenter une partie cylindrique de révolution 340, suivie d'un filetage 341 adapté à recevoir l'outil de coupe. Intérieurement, ce prolongateur comporte un chambrage 342 au diamètre du porte-outil 315 prolongé par un taraudage 343 apte à recevoir l'extrémité filetée 315A du porte-outil recevant normalement l'outil, une portée d'appui 344 étant prévue entre le chambrage et le taraudage.

En combinaison avec les dispositions ci-dessus, l'embout 302 comporte un filetage avec au moins une spire, mais préférentiellement deux, avec un pas intermédiaire à ceux de deux types différents d'une gamme de types d'écrous de corps de robinet.

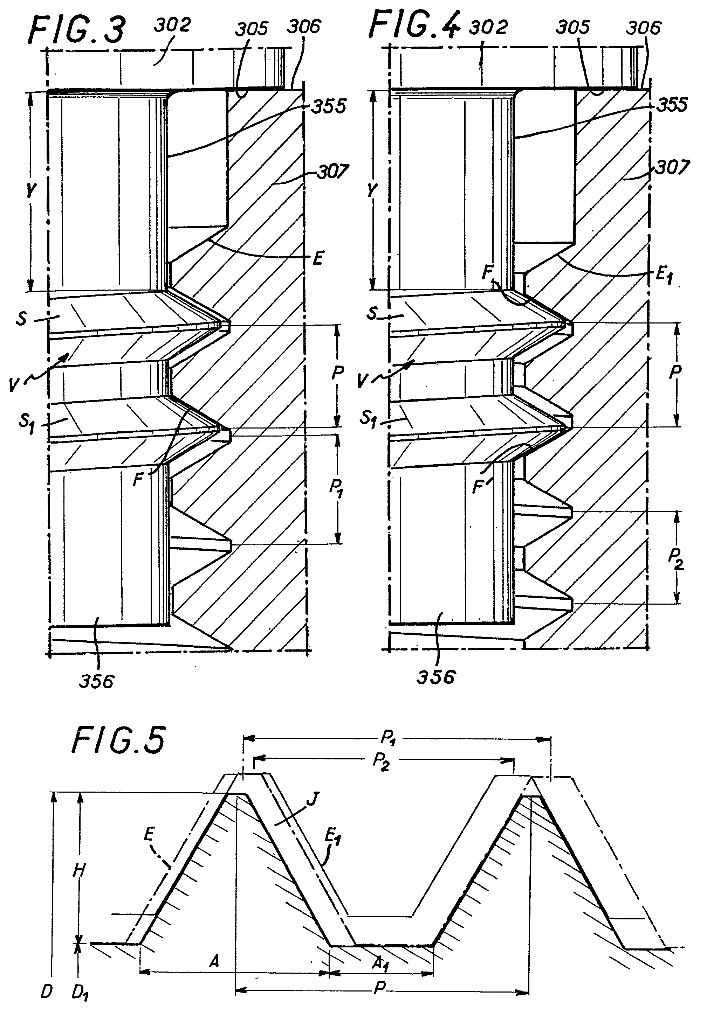

Un tel filetage d'embout est représenté à plus grande échelle aux figures 3, 4 et 5.

Sur ces figures, le filetage d'embout est indiqué globalement par V, tandis que deux types différents d'une gamme de types d'écrous de corps de robinet sont indiqués par E, E1; P indique le pas du filetage d'embout; P1, le pas de l'écrou E; P2, le pas de l'écrou E1; D, le diamètre du filetage aux crêtes des spires; D1, le diamètre du filetage à fond de filet; H, la hauteur des spires; A, l'épaisseur d'une spire à la base et A1 l'espace compris entre deux spires.

Dans l'exemple illustré, le diamètre des écrous E, E1, est de 20 mm; le pas de l'écrou E1 est de 1,25 mm, tandis que le pas de l'écrou E est de 1,50 mm.

Un filetage d'embout destiné à se visser indifféremment dans les deux écrous précités comporte au moins une spire mais préférentiellement deux S, S1, de part et d'autre desquelles sont ménagés d'une part, un dégagement 355 et, d'autre part, un tronçon terminal cylindrique de révolution 356.

Le dégagement 355 est limité par la portée d'appui 305 déjà mentionnée.

Le filetage d'embout, dans le cas considéré comporte un pas P intermédiaire de 1,411 mm; il présente une hauteur H de 0,75 mm, un diamètre D de 19,80 mm et un diamètre D1 de 18,30 mm; l'épaisseur A des spires est de 0,92 mm et l'espacement A1 compris entre les deux spires est de 0,491 mm.

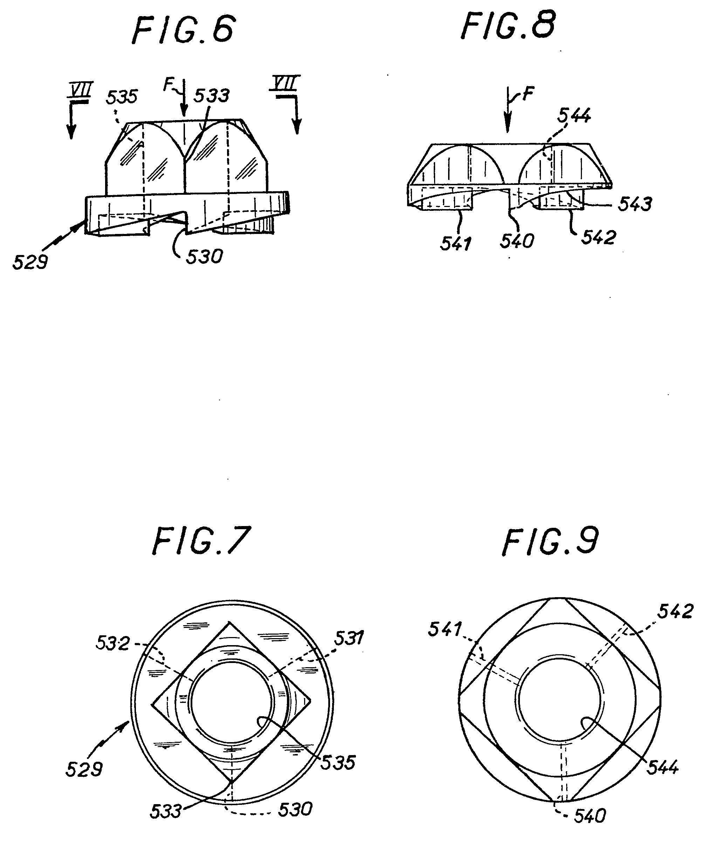

Ainsi qu'il est bien visible en particulier à la figure 5, le diamètre D1 au fond du filet formé par les spires est adapté au plus petit des diamètres de crête de filet des deux types d'écrous E, E1 choisis.

Par ailleurs, le profil aminci des spires, ménage par rapport à l'un ou l'autre des profils d'écrous, un supplément de jeu J au jeu initial normal prévu entre vis et écrou, de manière telle que le jeu entre ces éléments est au moins égal à la moitié de l'écart entre les deux pas.

Le dégagement 355 ménagé entre la portée d'appui 305 de l'adaptateur et la première spire S présente un diamètre de préférence égal au fond de filetage d'embout, tandis que la hauteur Y de ce dégagement 355 est la même pour tous les embouts.

Lorsque l'embout 302 est vissé dans un écrou, et lorsque la portée d'appui 305 dudit embout est en butée sur la face terminale 306 du corps de robinet 307, l'outillage est fixé au corps de robinet 307, l'outillage est fixé au corps de robinet par le contact d'au moins un tronçon de spire avec un flan de filet de l'écrou.

A la figure 3, le filetage V d'embout est vissé dans l'écrou E ayant un pas de 1,5 mm, c'est une portion du flan F de la spire S1 qui est au contact d'une portion du flan de filet F1 de l'écrou.

A la figure 4, le filetage V d'embout est vissé dans l'écrou E1 ayant un pas de 1,25 mm, le contact entre vis et écrou est établi par les deux spires du filetage d'embout, respectivement par une portion du flan de filet F de la spire S, et par une portion du flan de filet F' de la spire S1.

Ainsi. le filetage d'embout, grâce à son pas intermédiaire permet une fixation satisfaisante de l'outillage sur deux types d'écrous de corps de robinet.

Le tableau ci-après donne à titre d'exemple les caractéristiques de quelques filetages V d'embout suivant l'invention pour une gamme d'écrous E.

## TABLEAU

| Ø | ECROUS (E) | | | | | | VIS (V) | |
|---|---|---|---|---|---|---|---|---|
| | P1 | P2 | PAS | H | A | A1 | D | D1 |
| 16 | 1,5 | 1,25 | 1,411 | 0,75 | 0,92 | 0,491 | 15,80 | 14,30 |
| 17 3/8 | 1,5 | 1,337 | 1,411 | 0,83 | 1,07 | 0,341 | 16,60 | 14,94 |
| 18 | 1,5 | 1,25 | 1,411 | 0,75 | 0,92 | 0,491 | 17,80 | 16,30 |
| 19 | 1,5 | 1,25 | 1,411 | 0,75 | 0,92 | 0,491 | 18,80 | 17,30 |
| 20 | 1,5 | 1,25 | 1,411 | 0,75 | 0,92 | 0,491 | 19,80 | 18,30 |
| 21 1/2 | 1,814 | 1,5 | 1,65 | 1,09 | 1,37 | 0,28 | 20,80 | 18,62 |
| 22 | 1,5 | 1,25 | 1,411 | 0,75 | 0,92 | 0,491 | 21,80 | 20,30 |
| 23 | 1,5 | 1,25 | 1,411 | 0,75 | 0,92 | 0,491 | 22,80 | 21,30 |
| 26 3/4 | 1,814 | 1,5 | 1,5 | 0,93 | 1,22 | 0,28 | 25,96 | 24,10 |

L'outillage est avantageusement complété par un outil de taillage, tel que des fraises visibles aux figures 6 à 9. Aux figures 6 et 7 la fraise indiquée globalement en 529 est réalisée à partir d'un étiré, elle présente une face terminale de taille comportant trois dents de coupe 530 à 532 radiales à 120° les unes des autres, ainsi qu'une queue à section transversale carrée dont l'une des arêtes 533 est alignée avec une dent de coupe en l'occurrence avec la dent 530.

L'alignement de l'arête 533 avec une dent de coupe a pour but de constituer un point de repère d'usinage, et de permettre notamment, lors de l'affûtage des dents de coupe, de reprendre ces dents les unes après les autres selon leur ordre de réalisation par fraisage.

Un passage axial taraudé 535 est ménagé dans la fraise pour son assemblage avec l'axe porte-outil.

Aux figures 8 et 9 l'outil de taillage est analogue dans son ensemble à celui qui vient d'être décrit, mais les dents de coupe radiales présentent la particularité d'être réparties avec un décalage angulaire irrégulier par exemple 120° d'une dent 540 à une dent 541; 105° de cette dent 541 à une dent 542; et enfin 135° entre cette dent 542 et la dent 540 précitée; en vue de l'affûtage, la dent 540 est repérée avantageusement par une marque ménagée à la périphérie de la partie postérieure de l'outil.

De cette manière, une seule dent à la fois attaque une empreinte précédente en sorte que l'effort à exercer sur le volant de manoeuvre pour entraîner l'outil en rotation peut être exercé pratiquement sans effort.

Il sera observé que chaque dent de coupe comporte un dégagement 543, s'étendant en sens axial sur une hauteur notable facilitant l'évacuation des copeaux, tandis qu'un taraudage axial 544 est adapté à permettre l'assemblage de l'outil avec le porte-outil.

On conçoit que le diamètre des outils de taillage, le nombre des dents, pourraient être différents de ce qui vient d'être décrit en fonction des besoins, mais en suivant les particularités énoncées ci-dessus.

L'outillage est avantageusement complété par une fraise conique de finition à une seule dont (non représentée), apte à réaliser un chanfrein sur l'arête du siège, formée par le passage d'amenée de liquide, ceci afin d'éviter une détérioration du joint d'étanchéité équipant la tête du robinet.

Avec un tel outillage, il est nécessaire de s'assurer des caractéristiques de l'écrou sur lequel il doit être fixé de façon à sélectionner un adaptateur qui soit adaptable sur cet écrou.

En vue d'une opération de rodage l'outillage est préparé en dévissant le guide, lequel provoque le retrait de l'axe portant l'outil jusqu'à ce que ce dernier se trouve amené au contact de l'embout, ainsi qu'il est représenté à la figure 7.

L'outillage peut alors être fixé au corps de robinet après que la tête de robinet ait été ôtée.

L'outil de taillage est amené au contact du siège à réparer par vissage du guide sur le fourreau, le vissage étant stoppé dès qu'une résistance se manifeste au niveau du guide.

A ce stade on note la position angulaire du guide au moyen du repère, puis on tourne ensuite le volant d'entraînement de l'axe porte-outil dans le sens des aiguilles d'une montre, et, simultanément, le guide, ce dernier étant entraîné en rotation nettement plus lentement que le volant d'entraînement.

La rotation du guide sera en général limitée à 1/3 ou 1/2 de tour en sorte que selon le pas du système vis-écrou assemblant le guide au fourreau, ce pas étant en général un pas dit de 100 on obtiendra une course axiale de l'outil correspondant à un enlèvement de métal compris entre 0,3 mm et 0,5 mm.

Cette opération, dite de dégrossissage, étant terminée on procède à une finition du rodage par un entraînement en rotation rapide de l'axe portant l'outil, au moyen du bouton d'entraînement rapide, tandis que le guide est entraîné encore en rotation suivant un déplacement angulaire résiduel de finition limité à quelques degrés seulement par exemple.

Alors que la fraise est encore en rotation et afin d'empêcher qu'elle ne laisse de traces sur le siège, le guide est tourné rapidement à l'inverse das aiguilles d'une montre, le rodage est alors terminé et l'outillage peut être désaccouplé du corps de robinet.

On procède, après vérification du siège à un nettoyage par rinçage pour évacuer les copeaux.

On comprendra que les têtes de robinet pourraient comporter un filetage à pas intermédiaire conformément à l'invention, en sorte qu'une même tête de robinet pourrait être fixée sur l'un ou l'autre de deux corps comportant un écrou de pas différent, une telle application de l'invention ayant comme avantage principal celui de limiter les stocks de têtes de robinet sensiblement de moitié, d'où gain de place et économies appréciables.

**Revendications**

1. Outillage pour le réparation, en particulier pour rodage d'un siège de robinet (307), comprenant un axe porte-outil (315), un guide (300) portant cet axe et un adaptateur (301) portant ce guide, l'adaptateur ayant un embout (302) constituant une réplique de la tête de robinet normalement associée au corps de robinet, avec un filetage (V) complémentaire à celui dudit corps, cet embout étant surmonté d'un fourreau (303) comportant un filetage de fixation et d'avance (311) pour le guide (300), le guide comportant une jupe avec, à une partie terminale, un palier de butée à l'axe porte-outil (315), et intérieurement, un taraudage (310) propre à coopérer avec le filetage de fixation et d'avance, l'axe porte-outil s'édendant au-delà du palier jusqu'à un moyen de manoeuvre (350) ménagé à son extrémité libre, caractérisé en ce que le palier de butée est constitué par une butée à billes (316) à double effet dont la cage extérieure (320) est solidarisée avec le guide (300), tandis que le cage intérieure (317) est solidarisée avec l'axe (315) porte-outil aménagé à cet effet, de telle sorte à assurer une fixation axiale sans jeu de l'axe porte-outil (315) par rapport au guide (300), et en ce que, conjointement, le guidage radial de l'axe porte-outil (315) est assuré au moyen d'au moins une bague anti-friction (330, 331) brochée après un emmanchement à force dans l'un et/ou l'autre des éléments embout (302)-fourreau (303).

2. Outillage selon la revendication 1, caractérisé en ce que le guidage radial de l'outil est assuré par deux bagues (330, 331) brochées, en métal anti-friction, tel que bronze, l'une (330) étant emmanchée à force dans l'embout, côté raccordement au corps, et l'autre (331) également emmanchée à force dans le fourreau (303) côté guide, lesdites bagues étant brochées ensemble.

3. Outillage selon l'une quelconque des revendications précédentes, caractérisé en ce que le fourreau (303) porte une bague en feutre (332) entourant un tronçon de l'axe porte-outil (315), cette bague étant imprégnée d'un produit lubrifiant.

4. Outillage selon la revendication 1, caractérisé en ce que les cages (317, 320) de la butée à billes (316) comportent des gorges profondes aptes à envelopper la moitié au moins de la circonférence de grand cercle des billes (325), de telle sorte que le roulement ainsi obtenu peut encaisser éventuellement des efforts longitudinaux importants.

5. Outillage selon la revendication 4, caractérisé en ce que la cage intérieure (317) est solidarisée à l'axe porte-outil (315) entre un épaulement d'appui circulaire (318) ménagé dans ce dernier et un écrou de serrage (319) vissé sur le dit axe, tandis que la cage extérieure (320) est solidarisée au guide (300) entre un appui (321) ménagé dans le guide, et un écrou (323) vissé dans ce dernier.

6. Outillage selon la revendication 1, caractérisé en ce que:

— le filetage (V) d'embout (302) comportent au moins une spire réalisée avec un pas (P) intermédiaire à ceux de deux types différents d'une gramme de types d'écrous (E, E1) de corps de robinet;
— un diamètre de fond de filet (D1) est adapté au plus petit des diamètres de crête de filet des deux types d'écrou;
— un profil de filet aminci ménage par rapport à l'un ou l'autre des profils d'écrou des deux types, un supplément de jeu (J) au moins égal à la moitié de l'écart entre les deux pas.

7. Outillage selon la revendication 1, caractérisé en ce que l'outil est une fraise (529) comportant, une face terminale de coupe avec trois dents radiales à 120° (530, 531, 532) l'une de l'autre, et une queue à section transversale carrée, l'un des sommets (533) du carré étant aligné avec une dent de coupe.

8. Outillage selon la revendication 7, caractérisé en ce que les dents de coupe radiales sont réparties avec un décalage angulaire irrégulier, au lieu du décalage régulier à 120° entre dents.

9. Outillage selon la revendication 8, caractérisé en ce que le décalage angulaire des dents (530, 531, 532) est réparti comme suit, d'une première dent (530) à une seconde dent (531) 120°, de cette seconde dent (531) à une troisième dent (532) 105°, et enfin 135° de cette troisième dent (532) à la première dent (530), celle-ci étant en outre en correspondance avec un repère (533) prévu au préalable sur la périphérie de la fraise.

10. Outillage suivant la revendication 1, caractérisé par le moulage, de préférence en matière plastique, du guide (300), de l'adaptateur (301) et d'un moyen de manoeuvre de l'axe porte-outil constitué par un volant d'entraînement (350A, 350B).

11. Outillage selon la revendication 10, caractérisé en ce que l'adaptateur (301) est monobloc avec le fourreau (303) destiné à être vissé au guide (300), le filetage (V) d'embout, et entre le fourreau (303) et ledit filetage un volant de serrage manuel.

12. Outillage selon la revendication 10, caractérisé en ce que le volant d'entraînement (350A) de l'axe porte-outil (315) comporte une partie oblongue surmontée d'un bouton (350B) d'entraînement rapide.

13. Outillage selon l'une quelconque des revendications précédentes, caractérisé en ce que le guide (300) comporte sur sa surface extérieure au moins un repère d'avance du guide constitué par un plat (400B) s'étendant suivant une génératrice, ou par au moins un poinçonnage (334).

**Patentansprüche**

1. Vorrichtung zum Wiederherstellen, insbesondere zum Einlaufen eines Ventilsitzes (307) mit einer Werkzeughalteachse (315), einer die Achse tragenden Führung (300) und einem die Führung abstützenden Anpaßstück (301), das einen Ansatz (302) besitzt, der eine Nachbildung des normal dem Ventilgehäuse zugeordneten Ventilkopfes darstellt, mit einem zu dem Gehäusegewinde komplementären Außengewinde (V), wobei der Ansatz von einer Hülse (303) überragt ist, die ein Befestigungs- und Vorschub-Außengewinde (311) für die Führung (300) besitzt, wobei die Führung einen Mantel aufweist mit einem Längs-Drucklager für die Werkzeughalteachse (315) an einem Endabschnitt und mit einem Innengewinde (310) im Inneren versehen ist, das zum Zusammenwirken mit dem Befestigungs- und Vorschub-Außengewinde ausgelegt ist, und wobei die Werkzeug-Halteachse sich über das Lager bis zu einem an ihrem freien Ende vorgesehenen Bewegungsmittel (350) erstreckt, dadurch gekennzeichnet, daß das Längs-Drucklager durch ein Doppelwirkungs-Kugellager (316) gebildet ist, dessen Außenlauf (320) mit der Führung (300) fest verbunden ist, während der Innenlauf (317) mit der zu diesem Zweck ausgebildeten Werkzeughalteachse (315) fest verbunden ist, derart, daß eine spielfreie axiale Befestigung der Werkzeughalteachse (315) bezüglich der Führung (300) sichergestellt ist, und daß gleichzeitig die Radialführung der Werkzeughalteachse (315) sichergestellt ist mittels mindestens einer reibarmen Ringpackung (330, 331), welche nach zwangsweisen Einschieben in dem einen und/oder dem anderen der Elemente Ansatz (302)-Hülse (303) befestigt ist.

2. Vorrichtung nach Anspruch 1, dadurch gekennzeichnet, daß die Radialführung des Werkzeuges durch zwei befestigte Gleitpackungen (330, 331) aus Gleitmetall, z.B. Bronze, sichergestellt ist, von denen eine (330) zwangsweise in den Ansatz bündig mit dem Gehäuse und die andere (331) gleichartig zwangsweise auf der Führungsseite in die Hülse (303) eingeschoben ist, wobei die Ringpackungen zusammen befestigt sind.

3. Vorrichtung nach einem der vorangehenden ansprüche, dadurch gekennzeichnet, daß die Hülse (303) eine einen Abschnitt der Werkzeughalteachse (315) umgebende Filz-Ringpackung (332) trägt, die mit einem Schmierstoff getränkt ist.

4. Vorrichtung nach Anspruch 1, dadurch gekennzeichnet, daß die Läufe (317, 320) des Kugellagers (316) vertiefte Rillen enthalten, die zum Umhüllen mindestens der Hälfte des Umfangs des Großkreises der Kugeln (325) ausgelegt sind, derart, daß das so erhaltene Wälzlager gegebenenfalls beträchtliche Längsbelastungen aufnehmen kann.

5. Vorrichtung nach Anspruch 4, dadurch gekennzeichnet, daß der Innenlauf (317) mit der Werkzeughalteachse (315) zwischen einer daran vorgesehenen kreisförmigen Stützschulter (318) und einer auf die Achse aufgeschraubten Druckmutter (319) fest verbunden ist, während der Außenlauf (320) mit der Führung (300) zwischen einer in der Führung vorgesehenen Abstützung (321) und einer darin eingeschraubten Mutter (323) angebracht ist.

6. Vorrichtung nach Anspruch 1, dadurch gekennzeichnet, daß

— das Außengewinde (V) an dem Ansatz (302) mit mindestens einem Gewindegangschritt (P) versehen ist, der zwischen den beiden Muttergewindetypen-Bereichen (E, E1) des Ventilgehäuses liegt,
— ein Grund-Gewindedurchmesser (D1) ein wenig kleiner ausgelegt ist als die Freidurchmesser der beiden Muttergewindetypen, und
— daß gegenüber dem einen oder dem anderen der beiden Mutterprofiltypen ein schlankeres Außengewindeprofil vorgesehen ist, um ein Spiel (J) mindestens gleich der Hälfte des Abstandes zwischen den beiden Gangschritten zu liefern.

7. Vorrichtung nach Anspruch 1, dadurch gekennzeichnet, daß das Werkzeug ein Fräser (529) ist, der eine Endschneidfläche mit drei radialen Zähnen (530, 531, 532) mit Abstand von 120° voneinander und ein Endstück mit quadratischem Querschnitt enthält, wobei eine Kante (533) des Quadrates mit einem Zahn der Schneidfläche ausgerichtet ist.

8. Vorrichtung nach Anspruch 7, dadurch gekennzeichnet, daß die radialen Schneidzähne statt mit einem Abstand von 120° zwischen den Zähnen mit einem unregelmäßigen Winkelabstand voneinander angeordnet sind.

9. Vorrichtung nach Anspruch 8, dadurch gekennzeichnet, daß der Winkelabstand der Zähne (530, 531, 532) so aufgeteilt ist, daß ein erster Zahn (530) von einem zweiten Zahn (531) einen Abstand von 120°, der zweite Zahn (531) von einem dritten Zahn (532) einen Abstand von 105° und schließlich der dritte Zahn (532) von dem ersten Zahn (530) einen Abstand von 135° besitzt, wobei der letztgenannte darüberhinaus entsprechend einer vorher am Umfang des Fräsers angebrachten Markierung (533) sitzt.

10. Vorrichtung nach Anspruch 1, dadurch gekennzeichnet, daß die Führung (300), das Anpaßstück (301) und das durch ein Antriebsrad (350A, 350B) gebildete Bewegungsmittel der Werkzeughalteachse gegossen sind, bevorzugt aus einem Kunststoffmaterial.

11. Vorrichtung nach Anspruch 10, dadurch gekennzeichnet, daß das Anpaßstück (301) einteilig ausgeführt ist mit der zum Einschrauben in die Führung (300) bestimmten Hülse (303), Außengewinde (V) des Ansatzes und mit einem Hand-Andrückrad zwischen der Hülse (303) und dem Außengewinde.

12. Vorrichtung nach Anspruch 10, dadurch gekennzeichnet, daß das Antriebsrad an der Werkzeughalteachse (315) einen länglichen Abschnitt aufweist, der von einem Schnellantriebsknopf (350B) überragt ist.

13. Vorrichtung nach einem der vorangehenden Ansprüche, dadurch gekennzeichnet, daß die Führung (300) an ihrer Außenfläche mindestens eine Führungsvorschub-Markierung enthält, gebildet durch eine Einebnung (400B), die sich entsprechend einer Mantellinie erstreckt, oder durch mindestens eine Vertiefung (334).

## Claims

1. A tool for repairing and in particular grinding a tap seat (307), comprising a tool carrier spindle (315), a guide (300) carrying said spindle and an adaptor (301) carrying said guide, the adaptor having an end portion (302) forming a replica of the tap head which is normally associated with the tap body, with a screwthread (V) which is complementary to that of said body, said end portion having mounted thereabove a sleeve (303) comprising a fixing and advancing screwthread (311) for the guide (300), the guide comprising a skirt with, at a terminal portion, a thrust bearing for the tool carrier spindle (315) and, internally, a thread (310) capable of co-operating with the fixing and advancing screwthread, the tool carrier spindle extending beyond the bearing to an actuating means (350) provided at its free end, characterised in that the thrust bearing comprises a double-acting ball-type thrust bearing (316), the outer race (320) of which is secured to the guide (300) while the inner race (317) is secured to the tool carrier spindle (315) which is designed for that purpose, in order to ensure axial fixing without play of the tool carrier spindle (315) relative to the guide (300), and that at the same time radial guiding of the tool carrier spindle (315) is ensured by means of at least one anti-friction ring (330, 331) which is broached after being force-fitted into one and/or the other of the end portion (302) and the sleeve (303).

2. A tool according to claim 1 characterised in that radial guiding of the tool is ensured by two broached rings (330, 331) of anti-friction metal such as bronze, one ring (330) being a force fit in the end portion, on the side for connection to the body, and the other ring (331) also being a force fit in the sleeve (383), on the guide side, said rings being broached together.

3. A tool according to either one of the preceding claims characterised in that the sleeve (303) carries a felt ring (332) which is disposed around a portion of the tool carrier spindle (315), said ring being impregnated with a lubricating substance.

4. A tool according to claim 1 characterised in that the races (317, 320) of the ball-type thrust bearing (316) comprise deep grooves capable of enveloping at least half of the great-circle circumference of the balls (325), such that the resulting rolling bearing can possibly carry substantial longitudinal forces.

5. A tool according to claim 4 characterised in that the inner race (317) is secured relative to the tool carrier spindle (315) between a circular support shoulder (318) which is provided on the spindle and a clamping nut (319) which is screwed on to said spindle, while the outer race (320) is secured to the guide (300) between a support (321) provided to the guide, and a nut (323) which is screwed into the guide.

6. A tool according to claim 1 characterised in that:

— the screwthread (V) of the end portion (305) comprises at least one turn at a pitch (P) which is intermediate the pitches of two different types of a range of types of tap body female threads (E, E1);
— a minor diameter (D1) of the thread is adapted to the smallest of the major diameters of the two types of female screwthreads; and
— a reduced-thickness screwthread configuration provides, relative to one or other of the thread configurations of the two types of female screwthread, an additional clearance (J) which is at least equal to half the difference between the two pitches.

7. A tool according to claim 1 characterised in that the tool is a milling cutter (529) having a terminal cutting face with three radial teeth (530, 531, 532) at 120° relative to each other, and a shank portion of square cross-section, one of the corners (533) of the square being aligned with a cutting tooth.

8. A cutting tool according to claim 7 characterised in that the radial cutting teeth are distributed with an irregular angular displacement instead of the regular displacement at 120° as between teeth.

9. A tool according to claim 8 characterised in that the angular displacement of the teeth (530, 531, 532) is distributed as follows, from a first tooth (530) to a second tooth (531) 120°, from said second tooth (531) to a third tooth (532) 105° and finally 135° from said third tooth (532) to the first tooth (530), the latter also being disposed in association with a marking (533) previously provided on the periphery of the milling cutter.

10. A tool according to claim 1 characterised by moulding, preferably in plastics material, the guide (300), the adaptor (301) and a means for actuating the tool carrier spindle formed by a drive wheel (350A, 350B).

11. A tool according to claim 10 characterised in that the adaptor (301) is integral with the sleeve (303) intended to be screwed to the guide (300), the end portion screwthread (V) and, between the sleeve (303) and said screwthread, a manual tightening wheel.

12. A tool according to claim 10 characterised in that the wheel (350A) for driving the tool carrier spindle (315) comprises an oblong portion above which is mounted a rapid drive button (350B).

13. A tool according to any one of the preceding claims characterised in that the guide (300) is provided on its outside surface with at least one means for marking the advance movement of the guide, formed by a flat (400B) extending along a generatrix, or at least one punching (334).

# FIG.1

# FIG.2

0011580

FIG.3

302 305 306

355

307

Y

E

S

V

S₁

P

F

P₁

356

FIG.4

302 305 306

355

307

Y

F

E₁

S

V

S₁

P

F

P₂

356

FIG.5

P₁

P₂

J

E

E₁

H

D D₁

A A₁

P

2

## FIG.6

## FIG.8

## FIG.7

## FIG.9